# EUROPEAN PATENT APPLICATION

(11) **EP 3 168 484 A1**
(43) Date of publication of application: **17.05.2017**
(21) Application number: 16207529.5
(22) Date of filing: 02.07.2014
(51) Int. Cl.: F16B 17/00

(54) **STRUCTURAL ASSEMBLY AND METHOD OF ASSEMBLY THEREOF**

(30) Priority: 29.08.2013 US 201361871475 P
(62) Divisional of application: 14841313.1
(71) Applicant: I.G. Cardboard Technologies Ltd., 6157002 Tel Aviv (IL)
(72) Inventor: GAFNI, Izhar, 3885500 Ahituv (IL)
(74) Representative: Boult Wade Tennant

(57) **Abstract**

Assemblies comprising first and second assembly members attached to one another via a connection arrangement and methods for forming such assemblies.

## Description

### TECHNOLOGICAL FIELD

The invention relates to structural assemblies and method of assembly thereof, in particular, cardboard structures used for human powered vehicles.

### GENERAL DESCRIPTION

According to one aspect of the present application, there is provided an assembly comprising a first assembly member and a second assembly member attached to one another via a connection arrangement comprising a first connector element and a second connector element; the first connector element having a first segment fixedly received within the first assembly member and a second segment received within the second assembly member; the second connector element having at least a connecting segment received within said second assembly member; wherein the second segment of the first connector element comprises one or more recesses configured for receiving therein and interlocking with a corresponding portion of the connecting segment of the second connector element to thereby prevent detachment between the first assembly member and the second assembly member by restricting retraction of the first connector element out of the second assembly member.

Each of the first connector elements can extend along a longitudinal axis and said interlocking blocks axial retraction thereof along said axis. The second connector element can be arranged such that the axes of the first and the second connector elements or at least their imaginary extensions intersect one another or have at least one projection in which they appear to intersect one another.

By some embodiments, the arrangement can be such that the cross-sectional shape of the one or more recesses corresponds in shape and size to the cross-sectional shape of the connector received therein.

It is appreciated that the cross-sectional shape of the elongated connectors, taken perpendicular to the longitudinal axis thereof, can be of various designs, e.g. a regular polygonal shape, circular, oval, etc.

According to an embodiment of the invention, the first connector elements can project from the first assembly member while the second connector elements are fully received within the second assembly member. In addition, the first connector element can be formed with a recess configured for receiving therein a portion of the second connector.

The assembly can, by other embodiments, be such that the first assembly member is provided with a set of first connectors and the second assembly member is provided with a corresponding set of second connectors configured for engagement with the set of first connectors.

When the assembly is used for as human-powered vehicle such as a bicycle, the first assembly member may be, by an embodiment, a head tube of the bicycle and the second assembly member may be a frame of the bicycle.

Any of the assembly members can be made of a pulpable and shreddable material such as cardboard, or of organic material such as wood.

In order to fit the connectors into the corresponding assembly members, by an embodiment of the invention, the second assembly member can be pre-formed with a first set of apertures configured for receiving therein a set of first connectors and a second set of apertures configured for receiving therein a set of second connectors.

Alternatively, by another embodiment, the second connectors can be configured for forming apertures within the second member during assembly, upon their insertion into the second member.

The arrangement can be such that when the connectors are interlocked, at least the connectors that are formed with the recess are prevented from displacement along a longitudinal axis thereof.

By some embodiments, the entire assembly can further be provided with a cover member embracing the first and the second assembly member so as to restrict movement of at least one of the first and of the second connector.

In accordance with another aspect of the present application, there is provided a method for assembly of a structure comprising the steps of:
- providing a first assembly member and a second assembly member according to the first aspect of the subject matter of the present application;
- fitting the first assembly member with one or more first connectors so as to have a first segment received within the first assembly member and a second segment projecting from the first assembly member; at least one of the one or more first connectors comprising a recess;

- inserting the second segment of the one or more first connectors into the second member so that the one or more recesses is received therein;
- inserting one or more second connectors into the second assembly member to be received within the corresponding one or more recesses of the first connectors.

In some embodiments, the method includes pre-forming apertures at least within the second assembly member.

The first connectors, by an embodiment, may each have a first longitudinal axis and the second connectors each have a second longitudinal axis so that in assembly, the first axis and the second axis intersect one another or have at least one view in which they appear to intersect one another.

The method can further include providing a cover member embracing a part of the first assembly member and of the second assembly member.

The following numbered clauses show further illustrative examples:
1. An assembly comprising a first assembly member and a second assembly member attached to one another via a connection arrangement comprising a first connector element and a second connector element; the first connector element having a first segment fixedly received within the first assembly member and a second segment received within the second assembly member; the second connector element having at least a connecting segment received within said second assembly member; wherein the second segment of the first connector element comprises one or more recesses configured for receiving therein and interlocking with a corresponding portion of the connecting segment of the second connector element to thereby prevent detachment between the first assembly member and the second assembly member by restricting retraction of the first connector element out of the second assembly member.
2. The assembly of clause 1, wherein each of the first connectors elements extends along a longitudinal axis and said interlocking blocks axial retraction thereof.
3. The assembly of clause 1, wherein the second connector elongated, the axes of the first and the second connector elements or at least their imaginary extensions intersect one another or have at least one projection in which they appear to intersect one another.
4. The assembly of clause 1 or 2, wherein the cross-sectional shape of the one or more recesses corresponds in shape and size to the cross-sectional shape of the connector received therein.
5. The assembly of any one of clauses 1-3, wherein the cross-sectional shape of the connectors taken perpendicular to the longitudinal axis is a regular polygonal shape.
6. The assembly of any one of clauses 1-3, wherein the cross-sectional shape of the connectors taken perpendicular to the longitudinal axis is circular or oval.
7. The assembly of any one of clauses 1-6, wherein the first connector projects from the first assembly member while the second connector is fully received within the second assembly member.
8. The assembly of clause 7, wherein the first connector is formed with a recess configured for receiving therein a portion of the second connector.
9. The assembly of any one of clauses 1-8, wherein the first assembly member is provided with a set of first connectors and the second assembly member is provided with a corresponding set of second connectors configured for engagement with the set of first connectors.
10. The assembly of any one of clauses 1-9, wherein the first assembly member is a head tube of a bicycle and the second assembly member is a frame of the bicycle.
11. The assembly of any one of clauses 1-10, wherein at least one of the assembly members is made of cardboards.
12. The assembly of any one of clauses 1-11, wherein at least one of the first and the second connector is made of organic material.
13. The assembly of clause 12, wherein the organic material is wood.
14. The assembly of clause 12, wherein the organic material is cardboard.
15. The assembly of any one of clauses 1-14, wherein the second assembly member is pre-formed with a first set of apertures configured for receiving therein a set of first connectors and a second set of apertures configured for receiving therein a set of second connectors.
16. The assembly of any one of clauses 1-14, wherein the second connectors are configured for forming apertures within the second member during assembly.
17. The assembly of any one of clauses 1-14, wherein, when the connectors are interlocked, at least the connectors that are formed with the recess are prevented from displacement along a longitudinal axis thereof.
18. The assembly of any one of clauses 1-17, wherein the assembly is provided with a cover member embracing the first and the second assembly member to restrict movement of at least one of the first and of the second connector.
19. A method for assembly of a structure comprising the steps of:
   - providing a first assembly member and a second assembly member;
   - fitting the first assembly member with one or more first connectors so as to have a first segment received within the first assembly member and a second segment projecting from the first assembly member; at least one of the one or more first connectors comprising a recess;
   - inserting the second segment of the one or more first connectors into the second member so that the one or more recesses is received therein;
   - inserting one or more second connectors into the second assembly member to be received within the corresponding one or more recesses of the first connectors.
20. The method of clause 19, including pre-forming apertures at least within the second assembly member.
21. The method of clause 19 or 20, wherein the first connectors each have a first longitudinal axis and the second connectors each have a second longitudinal axis so that in assembly, the first axis and the second axis intersect one another or have at least one view in which they appear to intersect one another.
22. The method of any one of clauses 19-21, including providing a cover member embracing a part of the first assembly member and of the second assembly member.

### BRIEF DESCRIPTION OF THE DRAWINGS

In order to better understand the invention as disclosed herein and to exemplify how it may be carried out in practice, embodiments will now be described, by way of non-limiting example only, with reference to the accompanying drawings, in which:

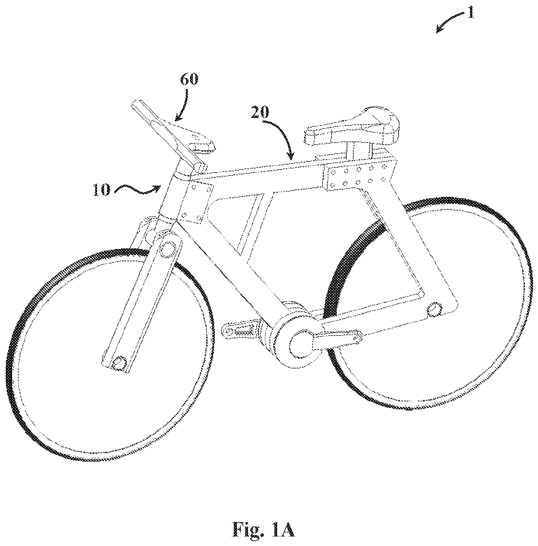

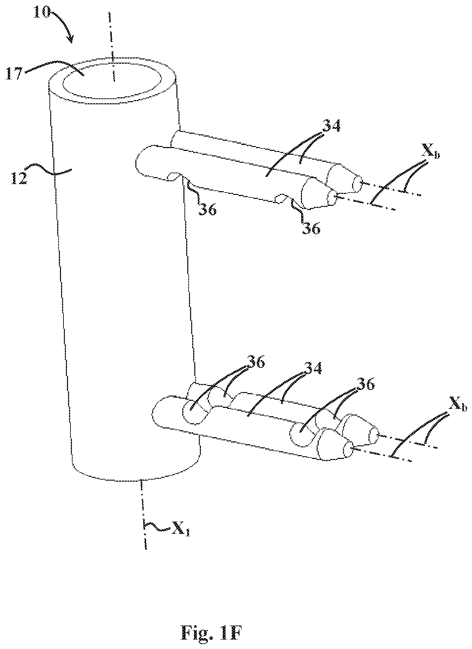

**Fig. 1A** is a schematic isometric view of a bicycle comprising the assembly of the subject matter of the present application;

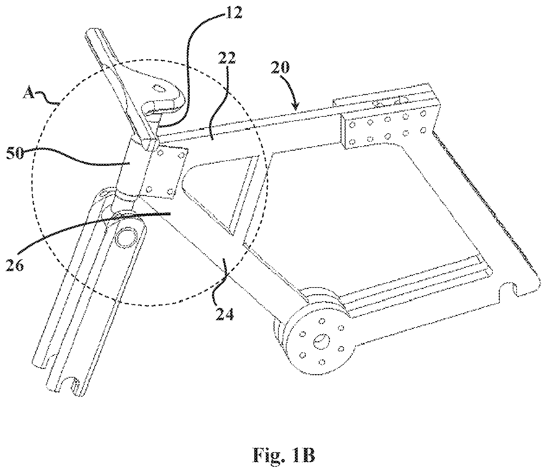

**Fig. 1B** is a schematic isometric view of certain elements of the assembly shown in Fig. 1A;

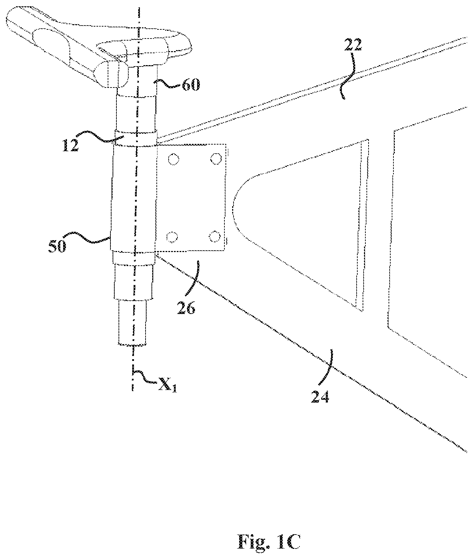

**Fig. 1C** is a schematic enlarged view of detail A shown in Fig. 1B;

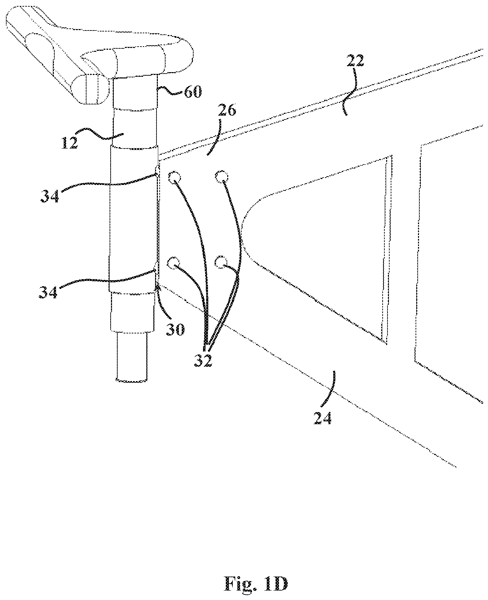

**Figs. 1D** to **1F** are schematic isometric view of detail A shown in Fig. 1C, with some of the components gradually stripped away for a clearer presentation of the assembly; and

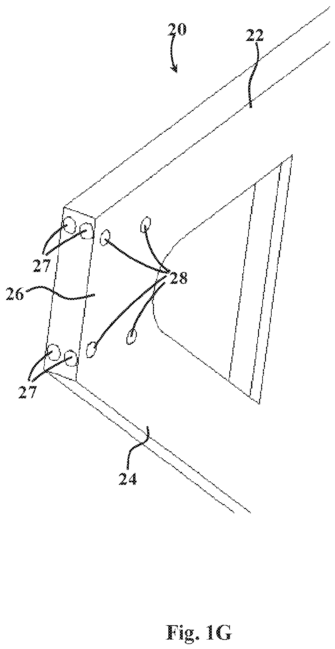

**Fig. 1G** is a schematic isometric view of the base frame.

### DETAILED DESCRIPTION OF EMBODIMENTS

Attention is first drawn to **Fig. 1A** in which a bicycle is shown, generally designated **1**, and comprising a base frame **20,** a handlebar **60** and head tube **10** articulated to the base frame **20** by the unique assembly of the present application. The head tube **10** is configured for receiving therethrough a shaft of the handlebar **60** to allow it to pivot in order to steer the bicycle **1**.

It is noted that while in standard bicycles the head tube is usually integrally formed with the base frame (by welding), in the present design, the head tube**10** is a separate component which is assembly together with the base frame **20.**

As previously described in US 2011/0133427 to the Applicant, bicycle can be made mainly of pulpable and shreddable material such as cardboard, and the above assembly can be particularly useful for such a type of bicycles. The frame elements may of the kind disclosed in Applicant's PCT applications WO 2014/061012 and PCT/IL2013/050823. However, it is appreciated that this type of assembly is not limited to cardboard bicycles and can similarly be applied in any construction.

With particular reference being made to **Figs. 1D** to **1F****,** the head tube **10** comprises a hollow tube **12** which extends along a longitudinal axis X₁ which is generally of vertical orientation when the bicycle is positioned on a reference surface such as the ground, the cavity **17** of the tube being configured for receiving therein the handlebar shaft.

Attention is now drawn to **Fig. 1G** in which the base frame **20** is shown comprising a crossbar **22**, a down tube **24** and a front frame portion **26**. The front frame portion **26** comprises a first set of receiving apertures **27** configured for receiving therein a corresponding segment of the main connecting elements **34** and a second set of receiving apertures **28** configured for receiving therein the auxiliary connecting elements **32.**

It is noted that the first receiving apertures **27** extend generally along the plane defined by the base frame **10** (i.e. defined by the crossbar **22** and down tube **24**) while the second receiving apertures **28** extend perpendicular to the above defined plane and pass through the front frame portion **26**.

Reverting now to **Figs. 1D** to **1F**, in assembly, the head tube **10** is provided with four main connecting elements **34** which are fitted to be partially received within the hollow tube **12** and protrude therefrom in a direction generally perpendicular to the main axis X₁. Each of the four main connecting elements **34** has a longitudinal axis Xb and comprises two recesses **36** formed at two spaced apart location along the longitudinal axis Xb.

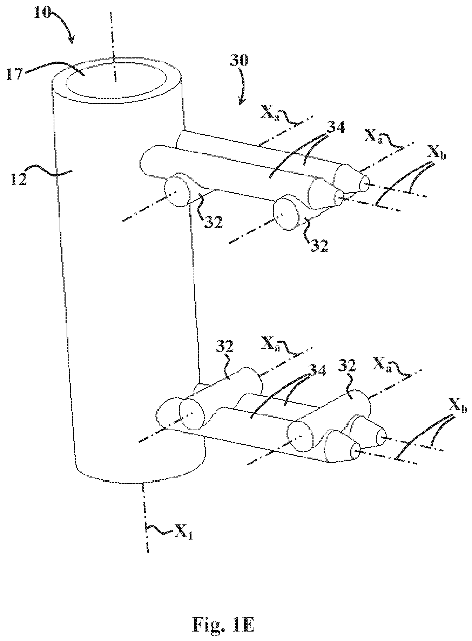

The main connecting elements **34** are configured for engagement with four corresponding auxiliary connecting elements **32** (shown **Fig. 1E**) via recesses **36** of a circular cross-section which are configured to be complimentary to the cross-section of the auxiliary connecting elements **32** which should be received therein.

It is noted that while the connecting elements **32**, **34** described above are shown to have a circular cross-section, this is not compulsory and connecting elements of other cross-sections (e.g. triangular, rectangular, oval etc.) can be contemplated. It should also be appreciated that the cross-sectional shape the connecting elements can differ from one connecting element to the other, with the sole requirement being that the cross-sectional shape of the recesses is designed to be complimentary to the cross-sectional shape of that connecting element with which it is engaged.

In the following stage of assembly, the head tube **10** together with the main connecting elements **34** is articulated to the base frame **20** by inserting the main connecting elements **34** into the first receiving apertures **27** until the recesses **36** are aligned with the second receiving apertures **28**. In this position, the auxiliary connecting elements **32** can be inserted into the second receiving apertures **28**, passing through the front frame portion **26**.

Once inserted, a portion of each of the main connecting elements **32** are received within the recesses **36** of the first connecting element **34**, thereby preventing extraction of the first connecting elements **34** from the front frame portion **26** along the longitudinal axis Xb, and consequently, preventing disengagement between the entire head tube **10** and the base frame **20.**

In order to secure the connection between the base frame **20** and the head tube **10,** a cover member **50** is provided embracing both the head tube **10** and a part of the front frame portion **26,** completely covering the second receiving apertures **28,** thereby preventing the auxiliary connecting elements **32** from being extracted from the front frame portion **26** along the longitudinal axis Xa.

The cover member **50** can be attached to the head tube **10** and base frame **20** by any known way, e.g. by an adhesive.

It is appreciated that the above described assembly can be provided not only between the head tube **10** and the base frame **20** of the bicycle **1** and is applicable for various assemblies of the bicycle **1**.

Those skilled in the art to which this invention pertains will readily appreciate that numerous changes, variations, and modifications can be made without departing from the scope of the invention, *mutatis mutandis.*

## Claims

1. An assembly comprising a first cardboard assembly member and a second cardboard assembly member attached to one another via a connection arrangement comprising a set of first connector elements and a set of second connector elements;
each of the first connector elements having a first segment fixedly received within the first assembly member and a second segment that projects from the first assembly member and is received within the second assembly member;
each of the second connector elements being fully received within said second assembly member;
the second segment of each of the first connector elements comprises at least two spaced-apart recesses, each configured for receiving therein and interlocking with a portion of a second connector element to thereby prevent detachment between the first cardboard assembly member and the second cardboard assembly member by restricting retraction of the first connector elements out of the second assembly member.

2. The assembly of claim 1, wherein each of the first connector elements extends along a longitudinal axis.

3. The assembly of claim 1 or 2, wherein the axes of the first and the second connector elements intersect one another.

4. The assembly of any one of claims 1 to 3, wherein the cross-sectional shape of the recesses in the first connector elements corresponds in shape and size to the cross-sectional shape of the second connector elements received therein.

5. The assembly of any one of claims 1 to 4, wherein the cross-sectional shape of the first and second connector elements taken perpendicular to the longitudinal axis is a polygonal shape, circular or oval.

6. The assembly of any one of claims 1 to 5, wherein at least one of the first and the second connector elements is made of organic material.

7. The assembly of claim 6, wherein the organic material is wood or cardboard.

8. The assembly of any one of claims 1 to 7, wherein the second assembly member is pre-formed with a first set of apertures configured for receiving therein said set of first connector elements and a second set of apertures configured for receiving therein said set of second connector elements.

9. The assembly of any one of claims 1 to 8, wherein the second connector elements are configured for forming apertures within the second assembly member during assembly.

10. The assembly of any one of claims 1 to 9, wherein the assembly is provided with a cover member embracing the first and the second assembly members to restrict movement of at least one of the first and of the second connector elements.

11. The assembly of any one of claims 1 to 10, wherein the first assembly member is a head tube of a bicycle and the second assembly member is a frame of the bicycle.

12. A method for assembly of a structure comprising the steps of:
- providing a first assembly member and a second assembly member, each of the first and second assembly members being made of cardboard;
- fitting the first assembly member with a set of first connector elements so as to have a first segment of the first connector elements received within the first assembly member and a second segment of the first connector elements projecting from the first assembly member; each of the first connector elements comprising two spaced-apart recesses;
- inserting the second segment of the first connector elements into the second assembly member;
- inserting a set of second connector elements into the second assembly member to be fully received within second assembly member, the second connector elements being received with said recesses.

13. The method of claim 12, including pre-forming apertures at least within the second assembly member.

14. The method of claim 12 or 13, wherein the first connector elements each have a first longitudinal axis and the second connector elements each have a second longitudinal axis so that in assembly, the first and the second longitudinal axes intersect one another.

15. The method of claim 15, including fitting a cover member to embrace a part of the first assembly member and of the second assembly member.
